# EUROPÄISCHE PATENTSCHRIFT

(11) **EP 1 996 641 B1**
(45) Veröffentlichungstag und Bekanntmachung des Hinweises auf die Patenterteilung: **14.10.2009**
(21) Anmeldenummer: 07711963.4
(22) Anmeldetag: 15.03.2007
(51) Int. Cl.: C08G 59/40, C08K 5/31

(54) **VERWENDUNG EINER SUBSTITUIERTEN GUANIDIN-VERBINDUNG ALS HÄRTER FÜR EPOXIDHARZE**
USE OF A SUBSTITUTED GUANIDINE COMPOUND AS A HARDENER FOR EPOXY RESINS
UTILISATION D'UN COMPOSE DE GUANIDINE SUBSTITUE EN TANT QU'AGENT DE DURCISSEMENT POUR RESINE EPOXYDE

(30) Priorität: 18.03.2006 DE 102006012550
(43) Veröffentlichungstag der Anmeldung: 03.12.2008
(73) Patentinhaber: AlzChem Trostberg GmbH, 83308 Trostberg (DE)
(72) Erfinder: HITZLER, Martin Georg, 83342 Tacherting (DE); GASTNER, Thomas, 84549 Engelsberg (DE)
(74) Vertreter: Dey, Michael
(86) Internationale Anmeldenummer: PCT/EP2007/002295
(87) Internationale Veröffentlichungsnummer: WO 2007/107288

(56) Entgegenhaltungen:
- EP-A- 0 663 415
- EP-A1- 0 017 232
- EP-A2- 0 039 230
- DE-A1- 19 909 270

## Beschreibung

Gegenstand der vorliegenden Erfindung ist die Verwendung einer substituierten Guanidin-Verbindung als Härter für Epoxidharze.

Bei Guanidinen handelt es sich um Imino-Derivate des Harnstoffs; unter den Kohlensäure-Abkömmlingen bilden sie eine der zahlenmäßig größten Gruppen. Unsubstituierte Guanidiniumsalze sind als Imprägnier- oder Flammschutzmittel sowie teilweise als Emulgatoren oder antistatische Agenzien in der Textil- und Papierindustrie von Bedeutung. Es existiert auch eine sehr große Zahl substituierter vertreter wobei viele Verbindungen kommerziell erhältlich sind. Als Zwischen- oder Endprodukte spielen sie bspw. in der Pharma- und Agroindustrie eine große Rolle.

Die vielfältigen Einsatzmöglichkeiten beruhen auf der extrem hohen Basizität der Guanidin-Struktureinheit, welche mit der Bildung eines stark resonanzstabilisierten Kations erklärt werden kann. Guanidine zählen zu den stärksten bekannten organischen Basen. In der organischen Synthese dominiert deshalb der Einsatz entsprechender substituierter Guanidine als starke, nicht nucleophile und sterisch anspruchsvolle Neutralbasen.

Guanidine zeichnen sich weiterhin durch eine große Hydrophilie aus, die in der hohen Polarität sowie der Möglichkeit zur Bildung von Wasserstoffbrückenbindungen begründet liegt. Die Guanidin-Funktion ist deshalb auch in der Natur ein ubiquitäres Strukturelement und ist beispielsweise in der Aminosäure Arginin, aber auch in den Aminosäure-Derivaten Kreatin und Kreatinin vertreten.

Aufgrund ihrer hohen Basizität liegt die Guanidino-Funktion hierbei nahezu ausschließlich in protonierter Form vor und trägt dadurch maßgeblich zur Löslichkeitsvermittlung von Naturstoffen bei. Da protonierte Guanidin-Funktionen auch ideale strukturelle Voraussetzungen zur Ausbildung von Salzbrücken mit anionischen Gruppen besitzen, sind diese auch bei der molekularen Erkennung von Substraten in Enzymen und zur Stabilisierung von Proteinkonformationen von entscheidender Bedeutung.

Synthetisch hergestellte langkettige Alkylguanidine werden seit der Mitte des letzten Jahrhunderts als Fungizide eingesetzt und finden auch als Biozide Verwendung. Beispielhaft sei hier das Dodecylguanidin-acetat (US 3,004,065) genannt, welches z. B. zur Bekämpfung von Schorf bei Apfel Birne und Pecanuss eingesetzt wird. Ein weiteres Beispiel ist Guazatin (DE 26 47 915 A1), welches ebenfalls als Fungizid, aber auch zum Beizen von Saatgut Verwendung findet.

Alkylguanidine und deren Derivate fanden auch in den kosmetischen Bereich Eingang. So beschreiben u. a. US 2004/258651 und US 2004/258652 Haarbehandlungsmittel und Haarnachbehandlungsmittel, die zur Verhütung von Schäden durch chemische Behandlungsmittel und zur Reparatur bereits geschädigter Haare eingesetzt werden, wobei Octylguanidin-lactat beispielhaft angeführt wird.

In neueren Untersuchungen an Ratten konnte für Octylguanidin auch ein protektiver Effekt auf den Herzmuskel bei ischämischen Zuständen nachgewiesen werden. Diese Wirkung wird auf einen bekannten inhibitorischen Effekt von Octylguarüdin auf nicht spezifische mitochondriale Poren zurückgeführt (Parra, E.; Molecular and Cellular Biochemistry (2005), 269(1&2), 19-26)..

Die Herstellung von Alkylguanidin-Derivaten und deren Salzen kann bspw. nach DE 506 282 C1, DE 195 27 313. A1, US 2004/258651 oder US 2004/258652 durch Guanylierung der Mono- oder Dialkylamine in alkoholischer Lösung mit wässrigem Cyanamid und in Gegenwart einer geeigneten Säure erfolgen. Das einfache und kostengünstige Einstufenverfahren liefert gut kristallisierende Produkte in hohen Ausbeuten und ist universell anwendbar.

Die Verwendung von Epoxidharzen ist aufgrund ihrer hervorragenden Eigenschaften wie hohe Schlagzähigkeit, hohe Abriebfestigkeit und gute Chemikalienbeständigkeit weit verbreitet. Sie zeigen zudem eine hervorragende Haftfähigkeit auf verschiedenen Werkstoffen und ein hohes elektrisches lsolationsvermögen. Sie dienen ferner als Matrix für Faserverbundwerkstoffe (Composites), die als strukturelle Komponenten für stark belastete Werkstoffe eingesetzt werden, Darüber hinaus sind sie meist Hauptbestandteil in Elektrolaminaten, Strukturklebstoffen, Gießharze und Pulverlacken.

Die Härtung von Epoxidharzen verläuft nach verschiedenen Mechanismen Neben der Härtung mit Phenolen oder Anhydriden wird häufig die Härtung mit Aminen beschrieben. Dabei wird eine stöchiometrische Menge an Wasserstoffatomen, wie sie z. B. bifunktionelle Amine liefern können, zugesetzt. Ein weiterer Mechanismus beschreibt die Reaktion von Initiatoren oder Beschleunigern mit den Epoxidgruppen, wobei reaktive Zwischenprodukte gebildet werden, welche erneut mit Epoxidgruppen reagieren können, ohne dass der Zusatz von weiteren Vernetzern notwendig ist. Zudem können die Initiatoren auch die Aktivierungsenergie der Härtungsreaktion erniedrigten und so die Härtungstemperaturen von reaktionsträgen Härtern wie bspw. Dicyandiamid (US 3,391,113;. EP 0 148 365 B2; US 2,637,715 B1) erheblich herabsetzen. Verbindungen, welche diese Eigenschaften aufweisen, sind u. a. tertiäre Amine, Imidazole oder substituierte Harnstoffe (Urone).

Für lagerstabile (latente) Epoxidharzgemische werden häufig Urone (Monuron, Diuron, Fenuron, etc.) bspw. in Kombination mit dem latenten Härter Dicyandiamid eingesetzt (vgl. US 3,562,215; US 3,956,237; GB 1,153,639 A1; GB 1,293,142 A1; US 3,386,956 B1; US 6,231,959 B1; DE 103 24 486 A1). Nachteilig bei den Uronen ist die Verwendung von toxischen Isocyanaten bei deren Herstellung sowie die Tatsache, dass beim Härtungsvorgang gasförmige Dimethylamin freigesetzt werden kann. Ein weiterer Nachteil sind die bei höherer Dosierung drastisch schlechter werdenden mechanischen Eigenschaften. Zudem enthalten viele der kommerziell eingesetzten Urone Halogene, was aus Umweltschutzgründen und aufgrund behördlicher Auflagen ebenfalls ungünstig ist.

Alternativ können Imidazole bspw. gemäß GB 1 050 679 hergestellt werden, jedoch besitzen diese Produkte eine nur sehr begrenzte Lagerstabilität, was bei vielen Anwendungen Probleme bereitet. Um diesen Problemen zu begegnen, wurden verschiedene Imidazol-Derivate beschrieben, wie z. B. Imidazolide (N-Acylimidazole; vgl. DE-OS 32 46 072) sowie mit Isocyanaten blockierte Imidazole. Beide Verbindungsklassen müssen sehr aufwendig durch Umsetzung mit speziellem Säurechloriden (unter HCl-Freisetzung) bzw. mit Isocyanaten produziert werden. Schließlich sind aus der DE-OS 39 19 431 Additive für hitzebeständige Epoxidharzmassen bekannt, die Addukte oder Umsetzungsprodukte von ggf. substituierten imidazolen mit aromatischen Hydroxysäuren wie z.B. Salicylsäufe darstellen, jedoch weisen diese Salze ebenfalls nur eine begrenzte Lagerstabilität auf.

Auch bestimmte Guanidin-Derivate besitzen die Eigenschaft, die Härtung von Epoxidharzen teils erheblich zu beschleunigen. Bspw. werden in US 3,308,094 Tetra- und Pentaalkylguanidine als Katalysatoren beschrieben, wobei insbesondere das 1,1,3,3-Tetramethylguanidin hervorgehoben wird. Ebenso werden in US. 6,743,375 Formulierungen beansprucht, die aus Tetramethylguanidin oder Addukten davon sowie Imidazolen, HydroxyVerbindungen und weiteren Aktivkomponenten bestehen; damit können Härtungstemperaturen von 60 bis 100 °C erreicht werden. Weiterhin sind Anwendungen von Guanidin-Verbindungen als. Co-Beschleuniger in Härterlösungen, die in einem geeigneten Lösemittel gelöst sind, bekannt (JP 87-145 505).

Oftmals kommen auch tetraalkylierte Guanidine in Formulierungen mit Dicyandiamid zur Anwendung, da sie vielfältige anwendungstechnische Vorteile bieten; sie sind u. a. korrosionsresistent (JP 55-018 472 A), schwer entzündbar (NL 8 003 936 A), schnellhärtend (JP 61-083 219 A), niedertemperaturhärtend (JP 61-133 228 A) oder sie zeigen eine niedrige Wasserabsorption (JP 61-207 425 A2). Ähnlich den Uronen oder den Imidazolen werden tetraälkylierte Guanidine auch als Beschleuniger in glas- oder karbonfaserverstärkten Verbundwerkstoffen eingesetzt (TW 33 62 45 A). Zudem sind sie auch als schnellhärtende Klebemassen einsetzbar (US 3,391,113).

In . JP 60-028 424 A wird speziell das N"-t-Butyl-N,N,N',N'-tetramethylguanidin als Beschleuniger für Dicyandiamid-, Phenol- oder Anhydrid-Härter mit hervorragenden thermischen Eigenschaften und Widerstandsfähigkeit gegeniden Einfluss von Wasserbeschrieben

Die Lehre von JP 63-146 910 A bezieht sich ausschließlich auf bicyclische Guanidine oder deren Salze als Beschleuniger für Epoxidharzmassen, die mit Anhydriden oder Novolacen gehärtet werden. Die Verbindungen zeichnen sich demgemäß durch eine schnelle Härtung und hohe Glasübergangstemperaturen (Tg) der gehärteten Produkte aus; allerdings werden sie durch Umsetzung von Guanidinen mit toxischen Acrylnitiril-Derivaten erhalten.

Interessanterweise lassen sich mercaptanhaltige Härter in Gegenwart von Tetramethylguanidin ohne Gelbfärbung oder Entstehung von Gerüchen mit Bisphenol A-Harzen umsetzen (JP 61-133 228).

Guanidiniumsalze, die gemäß EP 663 384 A oder EP 663 415 A1 durch Umsetzung der entsprechenden Alkylguanidine mit Trimellit-,Pyromellit- oder Phthalsäure hergestellt werden können, eignen sich in Epoxid- oder Hybrid-Festharzformutierungen als Mattierungsmittel für Pulverlacke mit niedrigen Einbrenntemperaturen.

Grundsätzlich zeigen alle diese Formulierungen vor allem beim Einsatz mit Flüssigharzen eine nur sehr geringe Lagerstabilität, was wahrscheinlich ein Grund für die geringe Verbreitung dieser Verbindungen in technischen Anwendungen ist. Einen Ansatzpunkt zur Lösung dieses Problems beschreibt US 3,391,113, wobei allerdings die Zugabe von Benzoe- oder Chlorbenzoesäure die Lagerstabilität lediglich von 2 auf 7 Tage erhöht. Ebenso erhöht sich die Lagerstabilität von Hybridpulverlacken, wenn N-acetyliertes Tetramethylguanidin, wie in WO 93/12157 oder US 3,732,286 beschrieben, eingesetzt wird. Nachteilig ist hier wiederum die Verwendung von Säurechloriden bei der Herstellung. JP 59-176 316 beschreibt die Erhöhung der Lagerstabilität in einer Harzformulierung mit Dicyandiamid, wobei eine Kombination aus Uron- (Diuron) und tetraalkyliertem Guanidin-Beschleuniger eingesetzt wird.

Ein weiterer Nachteil der literaturbekannten Guanidine besteht, darin, dass sie zumeist in flüssiger Form vorliegen. Flüssigkeiten sind aber schwerer im Verarbeitungsprozess einsetzbar und besitzen im Falle von Aminen oder Guanidinen als Basen korrosive Eigenschaften.

Aus dem Stand der Technik ist somit die Verwendung von Tetra- und Pentaalkylguanidinen oder auch Salze davon als Katalysatoren oder Beschleuniger für Formulierungen von Epoxidharzen mit weiteren Härtern bekannt. Diese weisen allerdings die beschriebenen und hinlänglich bekannten Nachteile auf, so dass sich für die vorliegende Erfindung die Aufgabe gestellt hat, geeignete weitere Guanidin-Verbindungen als Härter für Epoxidharze zur Verfügung zu stellen. Diese neuen Härter sollten eine hohe Reaktivität bei einer gleichzeitig, guten Lagerstabilität aufweisen. Außerdem war es unter wirtschaftlichen Aspekten wünschenswert, wenn diese Härter kostengünstig herzustellen sind und außerdem einen vorteilhaften Kosten-Nutzen-Effekt aufweisen.

Gelöst wurde diese Aufgabe durch die Verwendung einer, substituierten Guanidin-Verbindung der allgemeinen Formel (I) 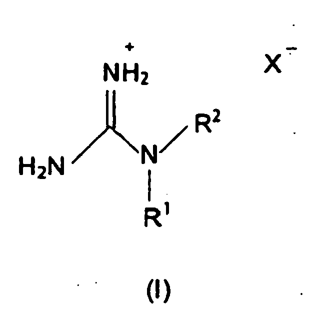 worin
- R¹ und R²: = H, ein linearer oder verzweigter aliphatischer C₆-C₂₀- Kohlenwasserstoff-Rest bedeuten und R¹ und R² nicht gleichzeitig H sind sowie
- X⁻: das Anion einer anorganischen Protonensäure oder Lewis- Säure bzw. organischen Carbonsäure darstellt.

Überraschend hat sich bei der erfindungsgemäßen Verwendung herausgestellt, dass die substituierten Guanidin-Verbindungen der allgemeinen Formel (I) mit sehr gutem Erfolg sowohl als alleinige Härter, aber auch in Kombination mit weiteren Co-Härtern oder Beschleunigern zur Härtung von Epoxidharzmassen eingesetzt werden. Insbesondere war nicht vorherzusehen, dass die Auslösetemperaturen abhängig vom jeweiligen , Schmelzpunkt der erfindungsgemäß eingesetzten Alkylguanidin-Salze sind. , Als Konsequenz ist daraus abzuleiten, dass die Auslösetemperatur der verwendeten Guanidin-Verbindungen über das Schmelzverhalten des Härters in der Epoxidharzformutierung einstellbar ist. Hinzu kommt, dass das Schmelz- und Lösungsverhalten der erfindungsgemäßen Härter-Komponente im Epoxidharz sowohl über die jeweils gewählten Reste R¹ und R² des Alkylguanidin-Kations und über das Anion X gezielt veränderbar ist.

Ebenfalls überraschend war die Erkenntnis, dass durch die Kombination mit handelsüblichen Beschleunigern, wie sie dem Fachmann bspw. aus der Heißhärtung von Epoxidharzen bekannt sind, das Härtungsprofil der Formulierungen variiert werden kann.

Es ist als erfindungswesentlich anzusehen, dass Salze der substituierten Guanidin-Verbindung gemäß der allgemeinen Formel (I) als Härter eingesetzt werden, 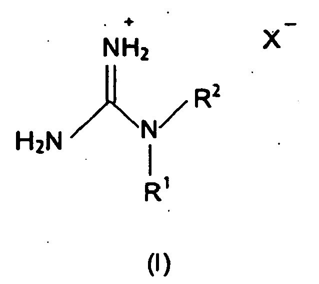 worin R¹ und R² oben genannte Bedeutung besitzen.

Das Anion X wird vorteilhafterweise aus anorganischen Protonensäuren oder Lewis-Säuren bzw. organischen Carbonsäure erzeugt und steht vorzugsweise für einen Vertreter der Reihe Chlorid, Perchlorat, Phosphat, Sulfat, Formiat, Acetat, Trifluoracetat, Malonat, Succinat, Adipinat, Pyruvat, Citrat, Lactat, Benzoat, Salicylat, Trifluormethylsulfonat, Tosylat, Dicyanamid, Tetrachloroaluminat, Hexachloroantimonat, Phosphortetrafluorid; Phosphorhexafluorid oder Bortetrafluorid.

R¹ und/oder R² sind bevorzugt ein linearer oder verzweigter C₆-C₁₈ Kohlenwasserstoffrest. R¹ und/oder R² können unabhängig voneinander in manchen Ausführungsformen auch ein C₆-C₃₀ Kohlenwasserstoffrest sein.

Als besonders geeignete Härter haben sich mono- oder dialkylsubsituierte Guanidin-Derivate mit C₈₋₁₂-Kohlenwasserstoffketten herausgestellt. Hervorzuheben ist insbesondere auch, dass diese sehr stabilen und gut kristallisierenden sowie handhabbaren Verbindungen nicht toxisch sind und zudem eine gute Verträglichkeit bei der Verarbeitung besitzen. Insbesondere aus Umweltschutzgründen sind dabei halogenfreie Salze insgesamt vorzuziehen.

Wie ebenfalls bereits diskutiert, war es vollkommen überraschend, dass die Guanidin-Verbindungen gemäß vorliegender Erfindung nicht nur alleine sondern auch in Kombination- mit bekannten Co-Härtern oder Beschleunigern die dargelegten guten Ergebnisse bei der Epoxidharzhärtung erzielen. Dies ist auch der Grund dafür, dass von der vorliegende Erfindung eine weitere Verwendungsvariante beansprucht wird, bei der das Alkylguanidin-Salz der allgemeinen. Formeln (I) als einzige Härter-Komponente, in Kombination mit mindestens einem anderen Epoxidharzhärter und/oder in Kombination mit mindestens einer Beschleuniger-Komponente eingesetzt wird. Die Begriffsunterscheidung zwischen "Härter" und "Beschleuniger" ergibt sich insbesondere aus der jeweiligen Einsatzmenge und der Geschwindigkeit des Härtungsvorganges. Typische Beschleuniger werden gegenüber den als Härter eingesetzten Verbindungen in geringerer Menge zudosiert und sie bewirken ein deutlich schnelleres Aushärten des Epoxidharz-Systems.

Generell ist anzumerken, dass die Anteile der erfindungsgemäß als Härter verwendeten Guanidin-Verbindungen in der jeweiligen EpoxidharzFormulierung breit variiert werden können. Dies beinhaltet den Vorteil, dass die Systeme den spezifischen technischen Anforderungen exakt angepasst werden können. Als sowohl ökonomisch wie auch technisch vorteilhaft haben sich im Hinblick auf die Alkylguanidin-Salze Mengen als vorteilhaft erwiesen, die zwischen 1 und 100 Gew.%, bezogen auf die Masse des zu härtenden Harzes, liegen. Einsatzmengen von 5 bis 50 Gew.-% und insbesondere solche von 15 bis 25 Gew.-% sind als bevorzugt anzusehen. Die Einsatzmenge hängt meist direkt vom Molekulargewicht der gewählten Guanidin-Verbindung ab und damit auch vom jeweils spezifischen HEW-Wert (Hydrogen Equivalent Weight). Dieses lässt sich bekanntermaßen als Quotient darstellen, wobei das Molekulargewicht des Härters durch die Anzahl der reaktiven (NH-)Funktionen geteilt wird. Ergänzend lässt sich der HEW-Wert auch bspw. über die Bestimmung der maximalen Glasübergangstemperaturen T_{g} genauer ermitteln.

Bspw. sind beim erfindungsgemäß verwendeten 1-Octylguanidinium-lactat (OGL) Anteile zwischen 15 und 25 phr (parts per hundred) als vorteilhaft anzusehen. Als besonders vorteilhaft haben sich Härteranteile zwischen 18 und 23 phr erwiesen; dies entspricht einem experimentell bestimmten HEW von .34 bis 44. Diese Formulierungen zeigen ohne Zusatz von Beschleunigern Auslösetemperaturen bereits um 120 °C (DSC Onset T). Die anhand der Glasübergangstemperaturen (T_{g}-Werte) bewerteten mechanische Eigenschaften der gehärteten erfindungsgemäßen Formulierungen entsprechen dabei mindestens dem Stand der Technik.

Sollten die Alkylguanidin-Salze in Kombination, mit mindestens einem weiteren Härter eingesetzt werden, was von der vorliegenden Erfindung, wie bereits dargelegt, ebenfalls umfasst wird, sollte das Ausmaß der Vernetzung des Epoxidharzes zu > 50 %, vorzugsweise > 60 % und besonders bevorzugt zwischen 75 und.90 % durch das Aikylguanidin-Salz der allgemeinen Formel (I) bewirkt werden.

Vorteilhafterweise wird die zusätzlich zum Alkylguanidin-Salz eingesetzte Härter-Komponente ausgewählt aus der Reihe der Verbindungen, die mindestens zwei Amino-, Imino-, Triazin-, Hydrazid- oder Phenolgruppen oder aber mindestens eine Anhydrid-Gruppe tragen, wobei es sich vorzugsweise um Ethylendiamin (EDA), meta-Xylylendiamin (MXDA), Methylendianilin (MDA), para-Aminocyclohexylmethan (PACM), Isophorondiamin (IPDA),ortho-Tolylbiguanid (OTB), Dicyandiamid (DCD), Diaminodiphenylsulfon (DDS), Isophthalsäuredihydrazid (IPDH), Adipinsäuredihydrazid (ADH), Phthalsäureanhydrid (PA), Pyromellitsäuredianhydrid (PMDA), Benzophenontetracarbonsäuredianhydrid (BTDA) oder um 2-(N'-Cyanoguanyl)-Derivate von N-haltigen Fünfringheterozyklen handelt.

Bei den zuletzt genannten 2-(N'-Cyanoguanyl)-Derivaten von N-haltigen Fünfringheterozyklen handelt es sich typischerweise um 1-(N'-Cyanoguanyl)-imidazol, 1-(N'-Cyanoguanyl)-2-methylimidazol, 1-(N'-Cyanoguanyl)-pyrrol, 1-(N'-Cyanoguanyl)-1,2,4-triazol, 1-(N'-Cyanoguanyl)-2-ethyl-4-methylimidazol, 1-Phenylimidazol und insbesondere um 1-(N'Cyanoguanyl)-2-vinylimidazol. Die Verwendung derartiger Fünfringheterozyklen als Härter für Epoxidharzmassen ist in der noch unveröffentlichten Patentanmeldung DE 102005 057 590.0 von Degussa AG beschrieben.

Auch durch den Zusatz handelsüblicher Beschleuniger kann das Härtungsprofil variiert werden. In diesem Zusammenhang sieht die vorliegende Erfindung vor, dass Kombinationen der Alkylguanidin-Salze mit mindestens einem Beschleuniger eingesetzt werden, der ausgewählt wird aus der Gruppe der Imidazole der allgemeinen Formel (II) 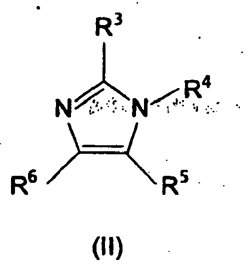 mit R³ bis R⁶ = H, lineare oder verzweigte Alkylreste, Hydroxy-, Hydroxylalkyl-, Alkoxy-, Cyano-, Cyanoalkyl-, Amino-, Aminoalkyl-, Alkylamino-Reste, mit
Alkyl = C₁-C₃₀-Kohlenwasserstoff, Halogene, einfach oder mehrfach substituierte oder unsubstituierte Phenylreste, und Addukte dieser Imidazole mit Epoxidharzen, und/oder aus der Gruppe der Harnstoffderivate nach Formel (III) 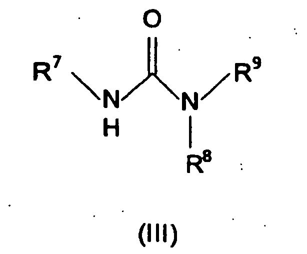 mit R⁷ bis R⁹ = H, Halogene, lineare oder verzweigte C₁-C₃₀-Alkylreste, einfach oder mehrfach substituierte oder unsubstituierte Phenyl- oder cycloaliphatische Reste mit 6 bis 12 Kohlenstoffatome, die vorzugsweise mindestens eine Struktureinheit -NH-(C=O)-NR⁸R⁹ tragen können.

Als besonders geeignete Vertreter der Gruppe der Imidazole als Beschleuniger-Komponente haben sich Verbindungen der Reihe 1 H-Imidazol, 1-Methylimidazol, 2-Methylimidazol, 1-Benzyl-2-methylimidazol, 2-Ethyl-4-methylimidazol, 2-Phenylimidazol, 2-Phenyl-4-methylimidazol, 1-Vinylimidazol, 1-(2-Hydroxyethyl)imidazol, 1,2-Dimethylimidazol, 2,4-Diamino-6-((2-(2-methyl-1-imidazoyl)ethyl)-1,3,5-triazin, 1-(Cyanoethyl)-2-methylimidazol, 1-(Cyanoethyl)-2-phenylimidazol, 4,5-(Dihydroxymethyl)-2-phenylimidazol und deren geeignete Salze erwiesen.

Setzt man einer Epoxidharzformulierung bestehend einem Bisphenol A Flüssigharz und einem der erfindungsgemäßen Härter zusätzlich einen geeigneten Beschleuniger wie bspw. Imidazole oder Urone zu, so können zum einen die Auslösetemperatur.abhängig von der Zugabemenge weiter gesenkt und zum anderen die Gelzeiten vorteilhaft den technischen Vorgaben und somit den speziellen Kundenbedürfnissen angepasst werden, ohne dabei die mechanischen Eigenschaften (bspw. die Tg-Werte) negativ zu beeinträchtigen..

Die vorliegende Ereindung sieht ebenfalls vor, dass die Alkylguanidin-Salze der allgemeinen Formel (I) auch in Kombination mit Tetra- oder Pentaalkylguanidinen als Katalysator und/oder Beschleuniger eingesetzt werden.

Insgesamt ist festzuhalten, dass sich in Abhängigkeit vom jeweiligen Epoxidharz-System aus der Kombination der erfindungsgemäß verwendeten Alkylguanidin-Salze als Epoxidharzhärter mit bekannten Co-Härter-Komponenten vorteilhafte synergistische Effekte ergeben, wobei insbesondere die zusätzliche deutliche Senkung der Ausiösetemperaturen zu nennen ist.

Die Härtung der Epoxidharze mit Hilfe der genannten Alkylguanidin-Salze erfolgt in der Regel bei Temperaturen zwischen 80 und 180 °C, wobei Temperaturbereiche zwischen 100 und 140 °C und solche zwischen 110 bis 130 °C als besonders bevorzugt anzusehen sind. Die Wahl der Härtungstemperatur ist abhängig von der spezifischen Verarbeitungs- und Produktanforderung und kann über die Formulierung durch Regulierung der Härtermenge und die eventuelle Zugabe von Beschleunigern und sonstigen Additiven variiert werden.

Hinsichtlich der zu härtenden Epoxidharz-Systeme unterliegt die vorliegende Erfindung ebenfalls keinerlei Beschränkung. Allerdings empfiehlt es sich, als Epoxidharze solche Verbindungen zu wählen, die üblicherweise mehr als eine 1,2-Epoxid-Gmppe aufweisen insbesondere werden gesättigte oder ungesättigte aliphatische, cycloaliphatische, aromatische oder heterocyclische Verbindungen eingesetzt, die gegebenenfalls Substituenten tragen können, die ausgewählt werden aus der Reihe der Halogen, der Phosphor- und Hydroxylgruppen.

Als besonders bevorzugt sind Epoxidharze auf Basis Glycidylpolyether von 2,2-Bis(4-hydroxyphenyl)propan (Bisphenol A), dessen mit Brom substituiertes Derivat (Tetrabrombisphenol A), um Glycidylpolyether von 2,2-Bis(4-hydroxyphenyl)methan (Bisphenol F) und Glycidylpolyether von Novolac-Harzen anzusehen.

Ein weiterer bevorzugter Aspekt ist darin zu sehen, dass es sich bei den Harzen um Fest- oder Flüssigprodukte handelt, wie sie handelsüblich erhältlich sind. Auch diese Variante wird von der vorliegenden Erfindung mit umfasst.

Schließlich beansprucht die vorliegende Erfindung noch die Verwendung der Alkylguanidin-Salze zum Härten von Epoxidharzen, wie sie zur Herstellung von Klebstoffen, Composites (Verbundwerkstoffen), Pulverlacken, Laminaten, Epoxidharzvergussmassen und/oder -gießharzen verwendet werden.

Ein bedeutender Vorteil der erfindungsgemäßen Verwendung als Härter ist in der guten Lagerstabilität (Latenz) zu sehen. Wie Versuche zur Lagerstabilität ergeben haben, zeigen Formulierungen, weiche die erfindungsgemäßen Härter enthaltenen, bei 60 °C Lagertemperatur auch nach 6 h nur einen sehr geringen Anstieg der Viskosität. Während solche Formulierungen, die nach dem Stand der Technik hergestellt wurden, spätestens nach 22 h bereits fest oder zumindest halbfest sind, können die erfindungsgemäßen. Formulierungen bis 48 h und länger verarbeitet werden. Diese sehr vorteilhafte Lagerstabilität von Epoxidharzmassen mit den erfindungsgemäßen Hartem kann durch Schmelz- bzw. Härteverhalten erklärt werden. Dies bedeutete dass die Harz-Härter-Dispersion vor dem Schmelzen des Härters diffusions- und damit kinetisch gehemmt ist und eine schnelle Härtung erst nach dem Schmelzen der Guanidin-Derivate oder deren Salze gegeben ist.

Die erfindungsgemäß verwendeten Härter können entweder kristallin, gekörnt oder als Pulver, so, wie sie aus der Synthese entstehen, oder aber in physikalisch veränderter Form eingesetzt werden. Hierzu eignet sich bspw. die Mikronisierung in dafür geeigneten Mühlen. Dem Fachmann ist bekannt, dass der Mikronisierungsgrad von Härtern und Beschleunigern Einfluss auf das Härtungsverhalten und somit auf die Eigenschaften der Produkte haben kann. Aus diesem Grund sollten die Härter gemäß Erfindung möglichst in einer feinverteilten Form, bevorzugt mit einer Korngrößenverteilung d98 kleiner 150 µm und besonders bevorzugt mit d98 kleiner 20 µm eingesetzt werden. Bestandteil der vorliegenden Erfindung ist ebenso der Einsatz von Hilfs- oder Zusatzstoffen wie z.B. Thixotropierungsmittel, Dispergieradditive, Antibackmittel (wie z.B. pyrogene oder gefällte Kieselsäuren), Füllstoffe, Farbstoffe, Pigmente (Metalloxide, u.a.), Leitpulver, Zähmodifikatoren (Toughener), etc. in Formulierungen' zusammen mit den erfindungsgemäßen Härtern. Weiterhin ist es als erfindungsgemäß anzusehen, wenn die Härter in gelöster oder aufgeschmolzener Form oder aber vordispergiert als Härter-Pasten (Masterbatches) eingesetzt werden. Je nach Anwendungsfall können die Härter zusammen mit weiteren Co-Härtem, Beschleunigern oder Additiven in ein flüssiges oder aufgeschmolzenes Epoxidharz eingemischt, dispergiert oder suspendiert werden oder als Lösung in das Epoxidharz oder in eine Lösung desselben eingebracht werden. Als Lösemittel können grundsätzlich alle Flüssigkeiten verwendet werden, in denen sich die Epoxidharze, Härter, Beschleuniger und ggf. weiteren Additive in ausreichendem Umfang auflösen. Beispiele für solche Lösemittel sind Wasser, verschiedene Glykolether wie Ethylenglykol- oder Propylenglykolmonomethylether sowie Ester davon, aber auch Ketone wie Aceton, MEK, MIBK oder Lösungsmittel wie DMF, etc.

Die nachfolgenden Beispiele veranschaulichen die Vorteile der vorliegenden Erfindung.

### Beispiele

Folgende Komponenten werden eingesetzt: .

### a) Epoxidharz. (Abkürzung in Klammem):

Epikote 828 (E.828, Hexion): Bisphenol A-Flüssigharz (EEW 182 - 187)

### b) zusätzliche Härter und Beschleuniger (Abkürzung in Klammern):

- Härter:
Dyhard 100S (Dyh 100S, Degussa):
mikronisiertes Dicyandiamid (HEW 12 -14)

- Beschleuniger:

| | |
|---|---|
| Dyhard UR200 (Dyh UR200, Degussa): | mikronisiertes Diuron |
| Dyhard UR500 (DyhvUR500,Degussa): | mikronisiettes:TDl-Uron |
| Dyhard MI-C (Dyh MI-C, Degussa): | kristallines 2-Methylimidazol |
| N,N,N',N'-Tetramethylguanidin (TMG): | kommerziell aus dem Laborchemikalienhandel erhältlich |

### c) Härter gemäß Erfindung:

### 1-Dodecylguanidinium-acetat (Dodine, kommerziell erhältlich)

**1-Octylguanidinium-lactat** (OGL) wurde im Labor nach literaturbekannten Methoden hergestellt und charakterisiert (US 2004 258 -65'1; US 2004 258 652).

**1,1-Dioctylguanidinium-lactat.** (DOGL) wurde analog OGL auf folgende Weise hergestellt:
19,98 g (82,7 mmol) Dioctylamin und 25,96 g (81,8 mmol) Milchsäure werden vorgelegt und auf 95 °C erwärmt. Sodann werden 12,17 g einer 50 %-igen wässrigen Lösung von Cyanamid (100 mmol) bei 90 °C über eine Stunde kontinuierlich zugetropft. Nach Beendigung der Zugabe lässt man 2 Stunden bei 95 °C nachreagieren. Das Wasser wird dann bei 105 °C (Ölbad) und Vollvakuum (10 mbar) abdestilliert (Destillationsbrücke). Man erhält in praktisch quantitativer Ausbeute ein gelb-bräunliches, hochvisköses Öl, welches über Nacht durchkristallisiert.
¹H-NMR (500 MHz, DMSO-d₆, 20°C): δ 3,63 (q, 1H). 3,18 (t, 4H), 1,45 (m, 4H), 1,24 (m, 20H), 1,11 (d, 3H), 0,84 (t, 6H). MS [m/z]: 284,3 (M+H⁺). Mp 53 °C.

| | | |
|---|---|---|
| C₂₀H₄₃N₃O₃ (373,58) | Ber. | C 64,30 H 11,60 N 11,25 |
| | Gef. | C 64,25 H 11,21 N 11,70 |

Die in den folgenden Beispielen genannten daten und Messwerte wurden nach folgenden Messmethoden erhoben:

### Durchführung der DSC-Messungen

Als Temperaturprogramm für die Bestimmung der Peak-Temperatur (DSC Peak T) wurde mit einer Rate von 10 K/min von 30 auf 300 °C aufgeheizt. Die Onset-Temperatur der Reaktion (DSC Onset T) wurde aus derselben Messung durch Anlegen der Tangente an den Reaktionspeak bestimmt.

Für die Ermittlung der isothermen Reaktionszeit wurde die Probe mit einer Rate von 20 K/min von 30 °C auf die angegebene Temperatur T aufgeheizt und für 40 min diese Temperatur konstant gehalten. Die Auswertung des zeitlichen Verlaufs des Härtungspeaks entspricht dem Zeitpunkt der maximal freiwerdenden Exothermie der Härtungsreaktion und wird als isotherme Reaktionszeit definiert.

### Messung der Glasübergangstemperatur (Tg)

Für die Bestimmung der Glasübergangstemperatur (Tg) wurde das Material aus der Gelzeitbestimmung herangezogen. Die Formulierung wurde durch Erhitzen auf 200 °C (Temperaturprogramm: 30 bis 200 °C, Heizrate 20 K/min) und Halten der Temperatur für 30 min vollständig ausgehärtet. Nach dem Abkühlen auf 30 °C- wurde die Probe mit einer Aufheizrate von 10 K/min von 30 auf 200 °C aufgeheizt und aus der Heizkurve durch Anlegen der Tangente im Wendepunkt der größten Änderung der Wärmekapazität der Tg bestimmt.

### Ermittlung der Lagerstabilitäten mittels Viskositätsmessungen

Als Startwert (0 h) wurden zunächst die dynamischen Viskositäten der jeweils frisch hergestellten Formulierungen bei 25 °C mittels eines Haake-Viskosimeters (Methode Kegel (1°)-Platte) ermittelt. Die Proben wurden sodann bei 60 °C temperiert und die Viskosität nach den angegebenen Zeiten (2, 4, 6, 22 und 48 h) erneut bei 25 °C gemessen.

### Beispiel 1

### Härtungsprofil der Guanidiniumsalze 1-Dodecylguanidinium-acetat (Dodine), 1-Octylguanidinium-lactat (OGL) und 1,1-Dioctylguanidinium-lactat (DOGL) gemäß Erfindung

Die Harzformulierungen wurden entsprechend der in Tabelle 1 angegebenen Zusammensetzungen angefertigt und wie beschrieben ausgetestet. Die Ergebnisse zeigen, dass die erfindungsgemäße verwendeten Härter deutlich reaktiver oder aber mindestens genau so aktiv wie Härter des Standes der Technik sind. Dies geht aus dem Vergleich der DSC-Peak-Temperaturen und der DSC-Onset-Temperaturen hervor. Durch Zugabe von üblichen Reaktionsbeschleunigem, wie sie dem Fachmann bekannt sind, können die Reaktionen weiter beschleunigt sowie die Gelzeiten und die Reaktionszeiten den Anforderungen entsprechend eingestellt werden. Die mechanischen Eigenschaften der erfindungsgemäß gehärteten Formulierungen entsprechen dabei mindestens dem Stand der Technik.

**Tabelle 1: Härtungstemperatur, Gelzeit, Glastemperatur (Tg), Reaktionszeit**

| Versuch (erfindungs gemäß) | Zusammensetzung der Formulierung (Gewichtsteile) | DSC Peak*) [°C] | DSC Onset*) [°C] | Gelzeit bei Temp. [min:sec] | Glastemperatur Tg [°C] | Reaktionszeit bei [min] |
|---|---|---|---|---|---|---|
| 1.1 (ja) | E.828 + **Dodine** (100 : 21,5) | 142,7 | 132,6 | 140°C 18-11 | 138 | 120°C 11,4 |
| | | | | | | |
| 2:1 | E.828+**OGL** (100:20,0) | 137,8 | 120,2 | 140°C 30:20 | 143 | 120°C 6,9 |
| 2.2 (ja) | E.828 +.**OGL** + Dyhard UR500 (100: 23,0:0,5) | 137,7 | 121,7 | 140°C 10:17 | 121 | 120° C 7,1 |
| 2.3 (ja) 2.3 | E.828.+ **OGL +** Dyhard MI-C (100:23,0:0,5) | 139,9 | 116.1 | 140°C 01:55 | 127 | 120°C 5,7 |
| | | | | | | |
| 3.1 (ja) | E.828 + **DOGL** (100 : 21,8) | 137,8 | 110,9 | 140°C 31:09 | 143 | 120°C 6,1 |
| | | | | | | |
| 4.1 (nein) | E.828 + Dyh 100S+ Dyhard UR200 (100 : 6,5 : 3,0) | 154,0 | 145,9 | 140°C 04:25 | 136 | 120°C 13,8 |
| 4.2 (nein) | E.828 + Dyh 100S + Dyhard UR200 (100 : 6,5 : 5,0) | 150,9 | 143,5 | 140°C 03:20 | 123 | 120°C 12,0 |
| 4.3 (nein) | E.828 + Dyh 100S + Dyhard UR 500 (100 : 6,5 : 1,0) | 152,0 | 142,5 | 140°C 03:53 | 140 | 120°C 13,2 |
| 4.4 (nein) | E.828 + Dyh 100S+ Dyhard MI-C (100 : 6,5 : 0,5) | 141,4 | 115,6 | 140°C 01:42 | 135 | 120°C 6,9 |
| | | | | | | |

| | | | | | | |
|---|---|---|---|---|---|---|
| *) Angaben für die exotherme Härtungsreaktion | | | | | | |

### Beispiel 2

### Lagerstabilität der Guanidiniumsalze 1-Dodecylguanidinium-acetat (Dodine), 1-Octylguanidinium-lactat (OGL) und 1,1-Dioctylguanidinium-lactat (DOGL) gemäß Erfindung

Als Maß für die Lagerstabilität (Latenz) wurden die Viskositäten der Formulierungen bestehend aus Epoxidharz, Härter und Beschleuniger wie beschrieben ermittelt. Hierbei, erwiesen sich die erfindungsgemäßen Formulierungen (Tabelle 2, Versuche 1.1, 2.1 und 3.1) im Vergleich zum Stand der Technik (Versuche 4.1 bis 4.6) als wesentlich latenter. Während keine der Vergleichsformulierungen basierend auf den in der Fachwelt als sehr latent geltenden Systemen bestehend aus dem latenten Härter Dyhard 100S und den latenten Beschleunigern Dyhard UR200 oder Dyhard UR500 nach 22 h noch messbar waren, war die Viskositätserhöhung beim erfindungsgemäßen Versuch 2.1 nur 153 %, während beim erfindungsgemäßen Versuch 1.1 der Viskositätsanstieg sogar nach 48 h gerade einmal 46 % betrug.

**Tabelle 2: Latenz bei 60°C (Messung der Viskosität bei 25°C)**

| Versuch (erfindungs gemäß) | Zusammensetzung der Formulierung (Gewichtsteile) | Latenz bei 60°C gemessen als Viskosität [Pa*s / 25°C] (Werte in Klammem: prozentuale Veränderung [%]) | | | | | |
|---|---|---|---|---|---|---|---|
| | | 0 hour | 2 h | 4h | 6 h | 22 h | 48 h |
| 1.1 (ja) | E.828 + **Dodine** (100:21,5) | 46,5 (0) | 44,9 (-3,4) | 47,6 (2,4) | 47,8 (2,8) | - | 67,8 (46) |
| | | | | | | | |
| 2.1 (ja) | E.828 + **OGL** (100 : 20,0) | 49,9 (0) | 58,9 (18) | 64,8 (30) | 55,5 (11) | 126 (153) | fest |
| | | | | | | | |
| 3.1 (ja) | E.828 **+ DOGL** 34,2 (100 : 21,8) | (ja) (0) | 16,5 (-51,8) | 25,4 (-25,7) | 74,6 (118) | halb-fest | fest |
| | | | | | | | |
| 4.1 (nein) | E.828+Dyh 100S + Dyhard UR200 (100 : 6,5 : 3,0) | 18,9 (0) | 19,4 (2,6) | 19,9 (5,3) | 20,3 (7,4) | halb-fest | fest |
| 4.2 (nein) | E.828 + Dyh 100S + Dyhard UR500 (100 : 6,5 : 1,0) | 18,8 (0) | 19,5 (3,7) | 20,1 (6,9) | 23,1 (23) | halb-fest | fest |
| 4.3 (nein) | E.828 + Dyh 100S ± Dyhard MI-C (100 : 6,5 : 0,5) | 18,1 (0) | 22,2 (22,7) | 62,4 (245) | halb-fest | fest | - |
| 4.4 (nein) | E.828 + Dyh 100S + TMG (100 : 6,5 : 0,5) | 17,2 (0) | 57,1 (232) | halb-fest | fest | - | - |
| 4.5 (nein) | E.828 + Dyh 100S + TMG (100:6,5:1,0) | 16,4 (0) | halb-fest | fest | - | - | - |
| 4.6 (nein) | E.828 + Dyh 100S + TMG (100 : 6,5 : 3,0) | 16,3 (0) | fest | - | - | - | - |
| | | | | | | | |

Anmerkung: Im Gegensatz zu Dodine und OGL und ebenso zu Dyhard 100S ist DOGL bei 60°C im Harz gelöst. Die bereits schon hohe Latenz des DOGL-Systems ist dadurch zusätzlich belegt.

### Beispiel 3

### Härtungsprofil des Guanidiniumsalzes 1-Octylguanidinium-lactat (OGL) (Erfindung) mit Dicyandiamid als Co-Härter

Die erfindungsgemäß verwendeten Härter wirken unterstützend auf das als sehr reaktionsträge bekannte Härtersystem Dicyandiamid (Tabelle 3 Vergleich Versuche 1.1 oder 1.2 mit 3.4). Die Reaktivität des Systems kann über die Anteile der neuen Härter eingestellt werden und ist gegenüber dem Stand der Technik (Versuche 3.1 bis 3.3) deutlich besser. Der Co-Härter Dyhard 100S wirkt zudem vorteilhaft auf die Austösetempefatur (T Onset) des erfindungsgemäß verwendeten Härters OGL (Vergleich Versuch 1.2 mit 2.1).

**Tabelle 3: Härtungstemperatur, Gelzeit, Glastemperatur (Tg), Reaktionszeit**

| Versuch (erfindungs gemäß) | Zusammensetzung der Formulierung (Gewichtsteile) | DSC Peak*) T [°C] | DISC Onset*) T [°C] | Gelzeit bei P Temp. [min:secl | Glastemperatur Tg[°C] | Reaktionszeit bei [min] |
|---|---|---|---|---|---|---|
| 1.1 (ja) | E.828+ OGL + Dyhard 100s (100:15,0:1,65) | 135,8 | 118,1 | 140°C 51:55 | 150 | 120°C 6,6 |
| 1.2 (ja) | E.828 + OGL + Dyhard 100S (100:11,0:3,0) | 136,3 | 116,8 | 140°C 25:30 | 144 | 120°C 6,4 |
| | | | | | | |
| 2.1 (ja) | E.828 + OGL (100:28,1) | 138,0 | 122,4 | 140°C 30:14 | 139 | 120°C 7,1 |
| | | | | | | |
| 3.1 (nein) | E.828+ Dyh 100S+ Dyhard UR200 (100 : 6,5 : 3,0) | 154,0 | 145,9 | 140°C 04:25 | 136 | 120°C 13,8 |
| 3.2 (nein) | E.828 + Dyh 100S+ Dyhard UR200 (100 : 6,5 : 5,0) | 150,9 | 143,5 | 140°C 03:20 | 123 | 120°C 12,0 |
| 3.3 (nein) | E.828 + Dyh 100S+ Dyhard UR500 (100 : 6,5 : 1,0) | 152,0 | 142,5 | 140°C 03:53 | 140 | 120°C 13,2 |
| 3.4 (nein) | E.828 + Dyh 100S (100:6,5) | 192,3 | 181,9 | 140°C > 3 h | 172 | 140°C > 60 min |
| | | | | | | |

| | | | | | | |
|---|---|---|---|---|---|---|
| *) Angaben für die exotherme ManungsreaKtlon | | | | | | |

## Patentansprüche

1. Verwendung einer substituierten Guanidin-Verbindung der allgemeinen Formel (I) 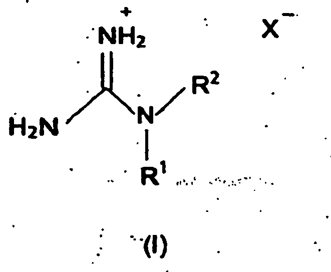 worin
R¹ und R² = H, ein linearer oder verzweigter aliphatischer C₆-C₂₀- Kohlenwasserstoff-Rest bedeuten und R¹ und R² nicht gleichzeitig H sind sowie
X⁻ ein Anion ist, ausgewählt aus der Gruppe Chlorid, Perchlorat, Phosphat. Sulfat, Formiat, Acetat, Triftuoracetat, Malonat, Succinat, Adipinat, Pyruvat, Citrat, Lactat, Benzoat, Saticylat, Trifluormethylsulfonat, Tosylat, Dicyanamid, Tetrachloroaluminat, Hexachloroantimonat, Phosphörtetra- fluorid, Phosphorhexafluorid oder Bortetrafluorid,
als Härter für Epoxidharze.

2. Verwendung nach Anspruch 1, **dadurch gekennzeichnet, dass** R¹ und R² für einen linearen oder verzweigten C₈-C₁₂-Kohlenwasserstoff-Rest stehen.

3. Verwendung nach einem der Ansprüche 1 oder 2, **dadurch gekennzeichnet, dass** das Alkylguanidin-Salz der allgemeinen Formel (I) als einzige Härter-Komponente, in Kombination mit mindestens eine anderen Epoxidharzhärter und/oder in Kombination mit mindestens einer Beschleuniger-Komponente eingesetzt wird.

4. Verwendung nach einem der Ansprüche 1 bis 3, **dadurch gekennzeichnet; dass** das Alkylguanidin-Satz in Mengen von 1 bis 100 Gew.-%, vorzugsweise von 5 bis 50 Gew.-% und insbesondere von 15 bis 25 Gew.-%, jeweils bezogen auf die Masse des zu härtenden Harzes, eingesetzt wird.

5. Verwendung nach einem der Ansprüche 1 bis 4, **dadurch gekennzeichnet, dass** das Alkylguanidin-Salz in Kombination mit mindestens einem weiteren Härter eingesetzt wird, wobei das Ausmaß der Vernetzung des Epoxidharzes zu > 50 %, vorzugsweise > 60 % und besonders bevorzugt zwischen 75 und 90 %, durch das Alkylguanidin-Salz der Formel (I) bewirkt wird.

6. Verwendung nach einem der Ansprüche 1 bis 5, **dadurch gekennzeichnet, dass** es sich bei der weiteren Härter-Komponente um Verbindungen mit mindestens zwei Amino-, Imino-, Triazin-, Hydrazid- oder Phenolgruppen oder aber mit mindestens einer Anhydrid-Gruppe und vorzugsweise um Ethylendiamin (EDA), meta-Xylylendiamin (MXDA). Methylendianilin (MDA), para-Aminocyclohexylmethan (PACM), Isophorondiamin (IPDA), ortho-Tolylbiguanid (OTB). Dicyandiamid (DCD), Diaminodiphenylsulfon (DOS). Isophthalsäuredihydrazid (IPDH), Adipinsäuredihydrazid (ADH), Phthalsäureanhydrid (PA), Pyromellitsäuredianhydrid (PMDA), Benzophenontetracarbonsäuredianhydrid (BTDA) oder zum 2-(N'-Cyanoguanyl)-Derivate von N-haltigen Fünfringheterozyklen handelt.

7. Verwendung nach einem der Ansprüche 1 bis 6, **dadurch gekennzeichnet, dass** Kombinationen der Alkylguanidin-Salze mit mindestens einem Beschleuniger ausgewählt aus der Gruppe der Imidazole der allgemeinen Formel (II) 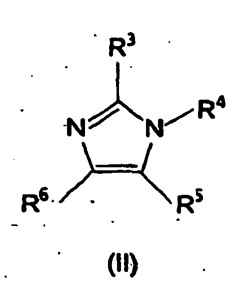 mit
R³ bis R⁶ =H, lineare oder verzweigte Alkylreste, Hydroxy-, Hydroxyalkyl-, Alkoxy-, Cyan-, Cyanoalkyl-, Amino-, Aminoalkyl-, Alkylamino-Reste, mit. "Alkyl" = C₁-C₃₀, Halogene, einfach oder mehrfach substituierte oder unsubstituierte Phenylreste, und Addukte dieser Imidazole mit Epoxidharzen,
und/oder mit Beschleunigern aus der Gruppe der Harnstoffderivate nach Formel (III) 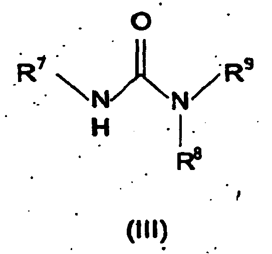 mit
R⁷ bis R⁹ = H, Halogene, lineare oder verzweigte C₁-C₃₀-Alkylreste, einfach oder mehrfach substituierte oder unsubstituierte Phenyl- oder cycloaliphatische Reste mit 6 bis 12 Kohlenstoffatome, die vorzugsweise mindestens eine Struktureinheit -NH-(C=O)-NR⁸R⁹ tragen können,
eingesetzt werden.

8. Verwendung nach einem der Ansprüche 1 bis 7, **dadurch gekennzeichnet, dass** die Imidazole ausgewählt werden aus der Reihe 1 H-Imidazol, 1-Methylimidazol, 2-Methylimidazol, 1-Benzyl-2-methylimidazol, 2-Ethyl-4-methylimidazol, 2-Phenylimidazol. 2-Phenyl-4-methylimidazol,1-Vinylimidazol, 1-(2-Hydroxyethyl)imidazol, 1,2-Dimethylimidazol, 2,4-Diamino-6-((2-(2-methyl-imidazoyl)ethyl)-1,3,5-triazin, 1-(Cyanoethyl)-2-methylimidazol. 1-(Cyanoethyl)-2-phenylimidazol, 4.5-(Dihydroxymethyl)-2-phenylimidazol und deren geeignete Salze, und die Harnstoff-Derivate ausgewählt werden aus der Reihe 3-(4-Chlorphenyl)-1,1-dimethylhamstoff (Monuron), 3-(3,4-Dichlorphenyl)-1,1-dimethylharnstoff (Diuron), 3-Phenyl-1,1-dimethylhamstoff (Fenuron) 3-(4-Isopropylphenyl)-1,1-dimethylharnstoff (Isoproturon), 3-(3-Trifluormethylphenyl)-1,1-dimethylharnstoff (Fluometuron), 3-(3-Chlor-4-methylphenyl)-1,1-dimethylharnstoff (Chlortoluron), 1,1-Dimethylharnstoff, N,N"-(4-Methyl-m-phenylen)bis(N',N'-dimethylhamstoff), N,N"-(Methyl-1,3-phenylen)bis(N',N'-dimethylhamstoff), Bis[p-(N,N-dimethylhamstoff)phenyl]methan,N,N"-(Methylendi-4,1-phenylen)bis[N.N-dimethylhamstoff], Bis[4-(N,N-dimethylharnstoff)cyclohexyl]methan, N,N"-(Methylendi-4,1-cyclohexanediyl)bis[N',N-dimethylhamstoff], 1-(N,N-Dimethylhamstoff)-3-(N,N-dimethylharnstoffmethyl)-3,5,5-trimethylcyclohexan, N'-[3-[[[(dimethylamino)carbonyl]amino]methyl]-3,5,5-trimethymcyclohexyl]-N,N-dimethylharnstoff und deren geeignete Salze.

9. Verwendung nach einem der Ansprüche 1 bis 8, **dadurch gekennzeichnet, dass** die Verbindung (I) in Kombination mit Tetra- und Pentaalkylguanidinen als Katalysator und/oder Beschleuniger eingesetzt wird.

10. Verwendung nach einem der Ansprüche 1 bis 9. **dadurch gekennzeichnet, dass** die Härtung bei Temperaturen von 80 bis 180 °C, bevorzugt von 100 bis 140 °C und besonders bevorzugt bei 110 bis 130 °C, erfolgt

11. Verwendung nach einem der Anspruche. 1 bis 10, **dadurch gekennzeichnet, dass** es sich bei den Epoxidharzen um Verbindungen mit 1,2-Epoxid-Gruppen handelt vorzugsweise um gesättigte oder ungesättigte aliphatische, cycloaliphatische, aromatische oder heterocyclische Verbindungen, die ggf. Substituenten aus der Reihe der. Halogene, Phosphor-und Hydroxyl-Gruppen tragen.

12. Verwendung nach Anspruch 11, **dadurch gekennzeichnet, dass** es sich um Epoxidharze auf Basis Glycidylpolyether von 2,2-bis(4-hydroxyphenyl)propan (Bisphenol A), dessen mit Brom substituiertes Derivat (Tetrabrombisphenol A), um Glycidylpolyether von 2,2-Bis(4-hydroxyphenyl)-methan (Bisphenol F) und Glycidylpolyether von Novolac-Harzen handelt.

13. Verwendung nach einem der Ansprüche 1 bis 12, **dadurch gekennzeichnet, dass** es sich bei den Harzen um Fest- oder Flüssigprodukte handelt.

14. Verwendung nach einem, der Ansprüche 1 bis 13 zur Herstellung von Klebstoffen, Composites (Verbundwerkstoffen), Pulverlacken, Laminaten, Epoxidharz Vergußmassen und/oder -Gießharzen.

## Claims

1. Use of a substituted guanidine compound of the general formula (I) 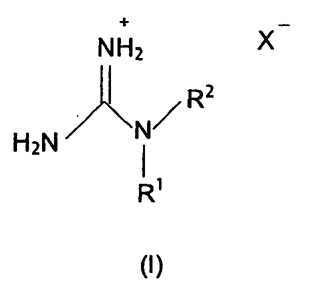 in which
R¹ and R² mean H, a linear or branched aliphatic C₆-C₂₀ hydrocarbon residue and R¹ and R² are not simultaneously H and
X⁻ is an anion selected from the group chloride, perchlorate, phosphate, sulfate, formate, acetate, trifluoroacetate, malonate, succinate, adipate, pyruvate, citrate, lactate, benzoate, salicylate, trifluoromethylsulfonate, tosylate, dicyanamide, tetrachloroaluminate, hexachloroantimonate, phosphorus tetrafluoride, phosphorus hexafluoride or boron tetrafluoride,
as a curing agent for epoxy resins.

2. Use according to claim 1, **characterised in that** R¹ and R² denote a linear or branched C₈-C_{12*} hydrocarbon residue.

3. Use according to either of claim 1 or claim 2, **characterised in that** the alkylguanidine salt of the general formula (I) is used as the sole curing agent component, in combination with at least one other epoxy resin curing agent and/or in combination with at least one accelerator component.

4. Use according to any one of claims 1 to 3, **characterised in that** the alkylguanidine salt is used in quantities of 1 to 100 wt.%, preferably of 5 to 50 wt.% and in particular of 15 to 25 wt.%, in each case relative to the mass of the resin to be cured.

5. Use according to any one of claims 1 to 4, **characterised in that** the alkylguanidine salt is used in combination with at least one further curing agent, wherein crosslinking of the epoxy resin is effected to an extent of > 50%, preferably of > 60% and particularly preferably of between 75 and 90% by the alkylguanidine salt of the formula (I).

6. Use according to any one of claims 1 to 5, **characterised in that** the further curing agent component comprises compounds having at least two amino, imino, triazine, hydrazide or phenol groups or alternatively having at least one anhydride group and preferably comprises ethylenediamine (EDA), metaxylylenediamine (MXDA), methylenedianiline (MDA), para-aminocyclohexylmethane (PACM), isophoronediamine (IPDA), ortho-tolylbiguanide (OTB), dicyandiamide (DCD), diaminodiphenyl sulfone (DDS), isophthalic acid dihydrazide (IPDH), adipic acid dihydrazide (ADH), phthalic anhydride (PA), pyromellitic dianhydride (PMDA), benzophenonetetracarboxylic dianhydride (BTDA) or 2-(N'-cyanoguanyl) derivatives of nitrogenous five-membered ring heterocycles.

7. Use according to any one of claims 1 to 6, **characterised in that** use is made of combinations of the alkylguanidine salts with at least one accelerator selected from the group of imidazoles of the general formula (II) 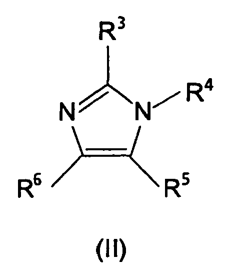 with
R³ to R⁶ = H, linear or branched alkyl residues, hydroxy, hydroxyalkyl, alkoxy, cyano, cyanoalkyl, amino, aminoalkyl, alkylamino residues, with "alkyl" = C₁- C₃₀, halogens, mono- or polysubstituted or unsubstituted phenyl residues, and adducts of these imidazoles with epoxy resins,
and/or with accelerators from the group of urea derivatives according to the formula (III) 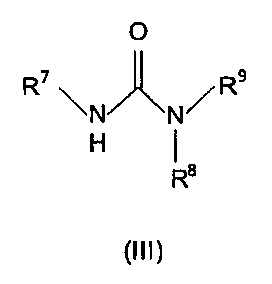 with
R⁷ to R⁹ = H, halogens, linear or branched C₁-C₃₀ alkyl residues, mono- or polysubstituted or unsubstituted phenyl or cycloaliphatic residues having 6 to 12 carbon atoms, which may preferably bear at least one structural unit -NH- (C=O) -NR⁸R⁹ _{.}

8. Use according to any one of claims 1 to 7, **characterised in that** the imidazoles are selected from the series 1H-imidazole, 1-methylimidazole, 2-methylimidazole, 1-benzyl-2-methylimidazole, 2-ethyl-4-methylimidazole, 2-phenylimidazole, 2-phenyl-4-methylimidazole, 1-vinylimidazole, 1-(2-hydroxyethyl)-imidazole, 1,2-dimethylimidazole, 2,4-diamino-6-((2-(2-methyl-1-imidazolyl)ethyl)-1,3,5-triazine, 1-(cyanoethyl)-2-methylimidazole, 1-(cyanoethyl)-2-phenylimidazole, 4,5-(dihydroxymethyl)-2-phenylimidazole and the suitable salts thereof, and the urea derivatives are selected from the series 3-(4-chlorophenyl)-1,1-dimethylurea (monuron), 3-(3,4-dichlorophenyl)-1,1-dimethylurea (diuron), 3-phenyl-1,1-dimethylurea (fenuron), 3-(4-isopropylphenyl)-1,1-dimethylurea (isoproturon), 3-(3-trifluoromethylphenyl)-1,1-dimethylurea (fluometuron), 3-(3-chloro-4-methylphenyl)-1,1-dimethylurea (chlortoluron), 1,1-dimethylurea, N,N"-(4-methyl-m-phenylene)bis(N',N'-dimethylurea), N,N"-(methyl-1,3-phenylene)bis(N',N'-dimethylurea), bis[p-(N,N-dimethylurea)phenyl]methane, N,N"-(methylenedi-4,1-phenylene)bis[N',N'-dimethylurea], bis[4-(N,N-dimethylurea)cyclohexyl]methane, N,N"-(methylenedi-4,1-cyclohexanediyl)bis[N',N'-dimethylurea], 1-(N,N-dimethylurea)-3-(N,N-dimethylureamethyl)-3,5,5-trimethylcyclohexane, N'-[3-[[[(dimethylamino)carbonyl]amino]methyl]-3,5,5-trimethylcyclohexyl]-N,N-dimethylurea and the suitable salts thereof.

9. Use according to any one of claims 1 to 8, **characterised in that** the compound (I) is used in combination with tetra- and pentaalkylguanidines as a catalyst and/or accelerator.

10. Use according to any one of claims 1 to 9, **characterised in that** curing proceeds at temperatures of 80 to 180°C, preferably of 100 to 140°C and particularly preferably at 110 to 130°C.

11. Use according to any one of claims 1 to 10, **characterised in that** the epoxy resins comprise compounds with 1,2-epoxide groups, preferably saturated or unsaturated aliphatic, cycloaliphatic, aromatic or heterocyclic compounds, which optionally bear substituents from the series of halogens, phosphorus and hydroxyl groups.

12. Use according to claim 11, **characterised in that** the epoxy resins are based on glycidyl polyethers of 2,2-bis(4-hydroxyphenyl)propane (bisphenol A), the bromine-substituted derivative thereof (tetrabromobisphenol A), glycidyl polyethers of 2,2-bis(4-hydroxyphenyl)methane (bisphenol F) and glycidyl polyethers of novolak resins.

13. Use according to any one of claims 1 to 12, **characterised in that** the resins are solid or liquid products.

14. Use according to any one of claims 1 to 13 for the production of adhesives, composites (composite materials), powder coatings, laminates, epoxy resin casting compounds and/or casting resins.

## Revendications

1. Utilisation d'une guanidine substituée de formule générale (I) 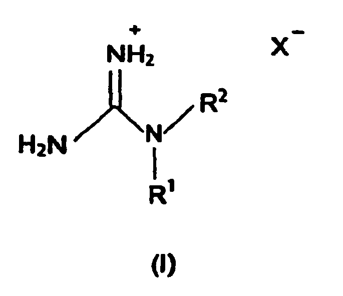 dans laquelle
R¹ et R² = H, un groupe hydrocarboné aliphatique en C₆ à C₂₀, linéaire ou ramifié et R¹ et R² ne sont pas en même temps H, et
X⁻ est un anion choisi dans le groupe formé par le chlorure, le perchlorate, le phosphate, le sulfate, le formiate, l'acétate, le trifluoro-acétate, le malonate, le succinate, l'adipinate, le pyruvate, le citrate, le lactate, le benzoate, le salicylate, le trifluorométhylsulfonate, le tosylate, le dicyanamide, le tétrachloro-aluminate, l'hexachloro-antimonate, le tétrafluorure de phosphore, l'hexafluorure de phosphore ou le tétrafluorure de bore,
en tant qu'agent durcissant pour des résines époxyde.

2. Utilisation selon la revendication 1, **caractérisée en ce que** R¹ et R² représentent un groupe hydrocarboné en C₈ à C₁₂ linéaire ou ramifié.

3. Utilisation selon l'une des revendications 1 ou 2, **caractérisée en ce que** le sel d'alkylguanidine de formule générale (I) est utilisé comme composant durcissant unique en combinaison avec au moins un autre durcissant de résine époxyde et/ou en combinaison avec au moins un composant accélérateur.

4. Utilisation selon l'une des revendications 1 à 3, **caractérisée en ce que** le sel d'alkylguanidine est utilisé à raison de 1 à 100 % en poids, de préférence, de 5 à 50 % en poids et en particulier, de 15 à 25 % en poids, respectivement, rapporté à la masse de la résine à durcir.

5. Utilisation selon l'une des revendications 1 à 4, **caractérisée en ce que** le sel d'alkylguanidine est utilisé en combinaison avec au moins un autre agent durcissant, l'ampleur de la réticulation de la résine époxyde étant due à > 50 %, de préférence > 60 % et de manière particulièrement préférée entre 75 et 90 % au sel d'alkylguanidine de formule (I).

6. Utilisation selon l'une des revendications 1 à 5, **caractérisée en ce que** les autres composants durcissants sont des composés comportant au moins deux groupes amino, imino, triazine, hydrazide ou phénol ou au moins un groupe anhydride, et sont de préférence choisis parmi l'éthylènediamine (EDA), la méta-xylylènediamine (MXDA), la méthylènedianiline (MDA), le para-aminocyclohexylméthane (PACM), l'isophorone-diamine (IPDA), l'ortho-tolylbiguanide (OTB), le dicyano-diamide (DCD), la diaminodiphénylsulfone (DDS), le dihydrazide d'acide isophtalique (IPDH), le dihydrazide d'acide adipique (AH), l'anhydride phtalique (PA), le dianhydride pyromellitique (PMDA), le dianhydride d'acide benzophénone-tétracarboxylique (BTDA) ou les dérivés 2-(N'-cyanoguanyle) d'hétérocycles azotés à cinq chaînons.

7. Utilisation selon l'une des revendications 1 à 6, **caractérisée en ce que** l'on utilise des combinaisons des sels d'alkylguanidine avec au moins un agent accélérateur choisi dans le groupe des imidazoles de formule générale (II) 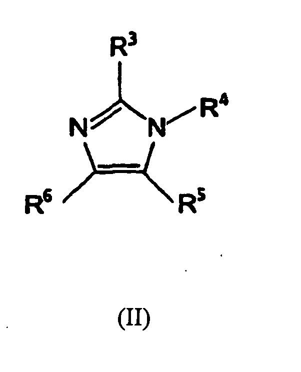 dans laquelle
R³ à R⁶ = H, des radicaux alkyle linéaires ou ramifiés, des radicaux hydroxy, hydroxyalkyle, alcoxy, cyano, cyanoalkyle, amino, aminoalkyle, alkylamino, avec « alkyle » = alkyle en C₁ à C₃₀, des atomes d'halogène, des radicaux phényles mono- ou poly-substitués ou non substitués et des adduits de ces imidazoles avec des résines époxydes,
et/ou avec des agents accélérateurs du groupe des dérivés d'urée de formule (III) 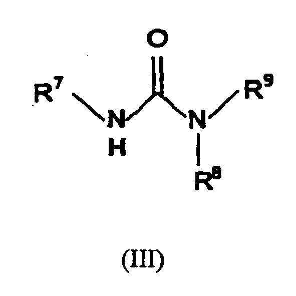 dans laquelle
R⁷ à R⁹ = H, un atome d'halogène, des groupes alkyle en C₁ à C₃₀ linéaires ou ramifiés, des groupes phényle ou cycloaliphatique mono- ou poly-substitués ou non substitués comportant 6 à 12 atomes de carbone qui peuvent porter au moins un motif structural NH-(C=O)-NR⁸R⁹_{.}

8. Utilisation selon l'une des revendications 1 à 7, **caractérisée en ce que** les imidazole sont choisies dans le groupe formé par 1H-imidazol, 1-méthylimidazol, 2-méthylimidazol, 1-benzyl-2-méthylimidazol, 2-éthyl-4-méthylimidazol, 2-phénylimidazol, 2-phényl-4-méthylimidazol, 1-vinylimidazol, 1-(2-hydroxyéthyl)imidazol, 1,2-diméthylimidazol, 2,4-diamino-6-((2-(2-méthyl-1-imidazoyl)éthyl)-1,3,5-triazine, 1-(cyanoéthyl)-2-méthylimidazol, 1-(cyanoéthyl)-2-phénylimidazol, 4,5-(dihydroxyméthyl)-2-phénylimidazol et leurs sels appropriés et les dérivés d'urée choisis dans le groupe formé par 3-(4-chlorophényl)-1,1-diméthylurée (monuron), 3-(3,4-dichlorophényl)-1,1-diméthylurée (diuron), 3-phényl-1,1-diméthylurée (fénuron), 3-(4-isopropylphényl)-1,1-diméthylurée (isoproturon), 3-(3-trifluorométhylphényl)-1,1-diméthylurée (fluométuron), 3-(3-chloro-4-méthylphényl)-1,1-diméthylurée (chlorotoluron), 1,1-diméthylurée, N,N"-(4-méthyl-m-phénylène)bis(N',N'-diméthylurée), N,N"-(méthyl-1, 3 - phénylène)bis(N',N'-diméthylurée), bis[p-(N,N-diméthylurée)phényl]méthane, N,N"-(méthylènedi-4,1-phénylène)bis[N',N'-diméthylurée], bis[4-(N,N-diméthylurée)cyclohexyl]méthane, N,N"-(méthylènedi-4,1 - cyclohexanediyl)bis[N',N'-diméthylurée], 1-(N,N-diméthylurée)-3-(N,N-diméthyluréeméthyl)-3, 5, 5-triméthylcyclohexane, N'-[3 - [[[(diméthylamino)carbonyl]amino]méthyl]-3,5,5-triméthylcyclohexyl]-N,N-diméthylurée et leurs sels appropriés.

9. Utilisation selon l'une des revendications 1 à 8, **caractérisée en ce que** le composé (I) est utilisé en combinaison avec des tétra- et penta-alkylguanidines comme catalyseur et/ou accélérateur.

10. Utilisation selon l'une des revendications 1 à 9, **caractérisée en ce que** le durcissement s'effectue à des températures de 80 à 180° C, de préférence de 100 à 140° C et de manière particulièrement préférée, de 110 à 130° C.

11. Utilisation selon l'une des revendications 1 à 10, **caractérisée en ce que** les résines époxydes sont des composés comportant des groupes 1,2-époxyde, de préférence, des composés saturés ou insaturés aliphatiques, cycloaliphatiques, aromatiques ou hétérocycliques qui portent éventuellement des substituants choisis parmi les atomes d'halogène, les groupes phosphore et hydroxyle.

12. Utilisation selon la revendication 11, **caractérisée en ce que** les résines époxyde sont à base de glycidyle de 2,2-bis(4-hydroxyphényl)propane polyéthoxylé (bisphénol A), son dérivé bromé (tétrabromobisphénol A), de glycidyle de 2,2-bis(4-hydroxyphényl)-méthane polyéthoxylé (bisphénol F) et de glycidyle de résines Novolac polyéthoxylées.

13. Utilisation selon l'une des revendications 1 à 12, **caractérisée en ce que** les résines sont des produits solides ou liquides.

14. Utilisation selon l'une des revendications 1 à 13, pour la production d'adhésifs, de composites (matériaux composites), de laques en poudre, de stratifiés, de produits de scellement à base de résine époxyde et/ou de résines à couler à base de résine époxyde.
